# EUROPEAN PATENT APPLICATION

(11) **EP 4 245 783 A1**
(43) Date of publication of application: **20.09.2023**
(21) Application number: 21891875.3
(22) Date of filing: 09.11.2021
(51) Int. Cl.: C08G 59/26, C08G 59/40, C08G 59/68, C08K 5/21, C08K 5/315, C08K 5/3445, C08K 5/53, C08K 7/02, C08L 63/00, C08J 5/24

(54) **PREPREG, MOLDED ARTICLE AND EPOXY RESIN COMPOSITION**

(30) Priority: 10.11.2020 JP 2020187388
(71) Applicant: Mitsubishi Chemical Corporation, Chiyoda-ku Tokyo 100-8251 (JP)
(72) Inventor: KAWAMURA Nao, Tokyo 100-8251 (JP); FUKUHARA Yasuhiro, Tokyo 100-8251 (JP); MISUMI Yuji, Tokyo 100-8251 (JP)
(74) Representative: Hoffmann Eitle
(86) International application number: PCT/JP2021/041232
(87) International publication number: WO 2022/102629

(57) **Abstract**

Provided are a prepreg and an epoxy resin composition that can shorten the combustion time of a molded article. The prepreg of the present invention is formed by impregnating a carbon fiber base material with an epoxy resin composition, wherein the epoxy resin composition comprises component (A): an organic phosphinate metal salt, component (B): an epoxy resin having an oxazolidone structure, and component (C): an imidazole compound or an imidazole compound derivative, and may comprise component (D): a urea compound.

## Description

### [Technical Field]

The present invention relates to a prepreg, a molded article, and an epoxy resin composition.

Priority is claimed on Japanese Patent Application No. 2020-187388, filed November 10, 2020, the content of which is incorporated herein.

### [Background Art]

Fiber-reinforced plastics (FRP), which combine resin and reinforcing fibers, have been used in various applications due to its excellent lightness, rigidity, impact resistance, and the like. In particular, carbon fiber-reinforced plastics are lightweight, high-strength, and high-rigidity and are thus used in a wide range of fields such as sports and leisure applications such as fishing rods and golf shafts, automobile applications, and aircraft applications. In addition, in recent years, taking advantage of the electromagnetic wave shielding properties of carbon fibers in addition to the mechanical characteristics of carbon fiber-reinforced plastics, carbon fiber-reinforced plastics have also been used as housings for electronic and electrical equipment such as laptop computers.

Fiber-reinforced plastics may be required to have a flame-retardant performance in various applications. For example, when fiber-reinforced plastics are used in electronic and electrical equipment, aircraft structures, and the like, a flame-retardant performance is required because there is a possibility that ignition due to heat generation will cause fires. As a method for imparting a flame-retardant performance to fiber-reinforced plastics, a method in which a brominated epoxy resin is added to a matrix resin composition has been widely used. However, in recent years, in consideration of the burden on the human body and the environment of substances generated when resin compositions including halogens are combusted, epoxy resin compositions including phosphorus-based flame retardants have been used (refer to Patent Document 1 and 2). As an epoxy resin composition including a phosphorus-based flame retardant, by using a metal phosphate, a novolac-type epoxy resin, a polyfunctional epoxy resin, and a metal hydroxide, a total heat release and a peak heat release of 65 or less have been achieved (refer to Patent Document 3).

### [Citation List]

### [Patent Documents]

[Patent Document 1]
   Japanese Unexamined Patent Application, First Publication No. 2007-106978
[Patent Document 2]
   Japanese Unexamined Patent Application, First Publication No. 2017-218573
[Patent Document 3]
   Japanese Unexamined Patent Application, First Publication No. 2017-2202

### [Summary of Invention]

### [Technical Problem]

From the viewpoint of the length of the combustion time in the flame-retardant performance, for example, it is possible to shorten the combustion time by greatly increasing the amount of flame retardant. However, when the amount of the flame retardant is increased, there are problems in that the flame retardant bleeds out on the surface of the prepreg, the release from the mold at the time of molding is difficult, and defects occur in the external appearance.

One object of the present invention is to provide a prepreg and an epoxy resin composition that can shorten the combustion time of a molded article.

### [Solution to Problem]

As a result of extensive research, the present inventors found that it is possible to shorten the combustion time of molded articles by using a specific flame retardant and an epoxy resin having a specific structure together, thereby completing the present invention. In addition, it was found that, by using a specific flame retardant and an epoxy resin having a specific structure together, it is possible to obtain an epoxy resin composition having high flame retardancy and fast curing properties and to obtain a molded article which has a favorable external appearance.

That is, the present invention has the following aspects.
[1] A prepreg formed by impregnating a carbon fiber base material with an epoxy resin composition,
   wherein the epoxy resin composition comprises component (A), component (B), component (C), and component (D);
   Component (A): an organic phosphinate metal salt,
   Component (B): an epoxy resin having an oxazolidone structure,
   Component (C): an imidazole compound or an imidazole compound derivative,
   Component (D): a urea compound.
[2] The prepreg according to [1],
   wherein the epoxy resin composition further comprises component (E);
   Component (E): a dicyandiamide or a dicyandiamide derivative.
[3] The prepreg according to [1] or [2],
   wherein the epoxy resin composition further comprises component (F);
   Component (F): at least one type of epoxy resin selected from novolac-type epoxy resins, naphthalene-type epoxy resins, and biphenyl-type epoxy resins.
[4] The prepreg according to any one of [1] to [3],
   wherein the component (A) is an organic phosphinate metal salt represented by Formula (1), 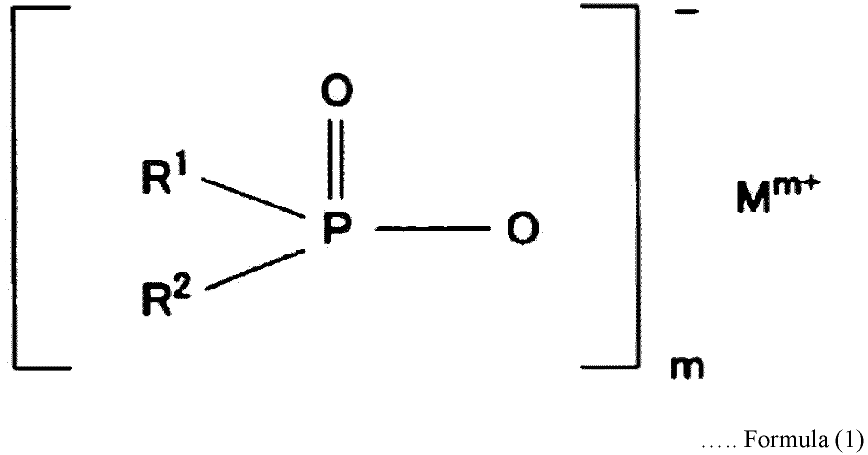
   (in Formula (1), R¹ and R² are each independently an alkyl group or an aryl group, M is at least one type selected from the group consisting of Mg, Ca, Al, Sb, Sn, Ge, Ti, Zn, Fe, Zr, Ce, Bi, Sr, Mn, Ni, Li, K, and Na, and m represents an integer of 1 to 4).
[5] The prepreg according to [4],
   wherein R¹ and R² are alkyl groups, M is Al, and m is 3 in Formula (1).
[6] The prepreg according to any one of [1] to [5],
   wherein a mass ratio of the component (A) to the component (B) (component (A)/component (B)) comprised in the epoxy resin composition is 0.05 to 0.5.
[7] The prepreg according to any one of [1] to [6],
   wherein the component (A) is comprised as 1 to 25 parts by mass with respect to 100 parts by mass of the epoxy resin composition.
[8] The prepreg according to any one of [1] to [7],
   wherein the component (B) is comprised as 20 to 50 parts by mass with respect to 100 parts by mass of the epoxy resin composition.
[9] The prepreg according to any one of [1] to [8],
   wherein the component (C) is comprised as 1 to 30 parts by mass with respect to 100 parts by mass of the epoxy resin composition.
[10] The prepreg according to any one of [1] to [9],
   wherein the component (D) is at least one type of compound selected from the group consisting of phenyldimethylurea, methylenebis(phenyldimethylurea), and tolylenebis(dimethylurea).
[11] A molded article formed by curing the prepreg according to any one of [1] to [10].
[12] An epoxy resin composition comprising component (A), component (B), component (C), and component (D);
   Component (A): an organic phosphinate metal salt,
   Component (B): an epoxy resin having an oxazolidone structure,
   Component (C): an imidazole compound or an imidazole compound derivative,
   Component (D): a urea compound.
[13] The epoxy resin composition according to [12], further comprising:
   component (E);
   Component (E): a dicyandiamide or a dicyandiamide derivative.
[14] The epoxy resin composition according to [12] or [13], further comprising:
   component (F);
   Component (F): at least one type of epoxy resin selected from novolac-type epoxy resins, naphthalene-type epoxy resins, and biphenyl-type epoxy resins.
[15] The epoxy resin composition according to any one of [12] to [14],
   wherein the component (A) is an organic phosphinate metal salt represented by Formula (1). 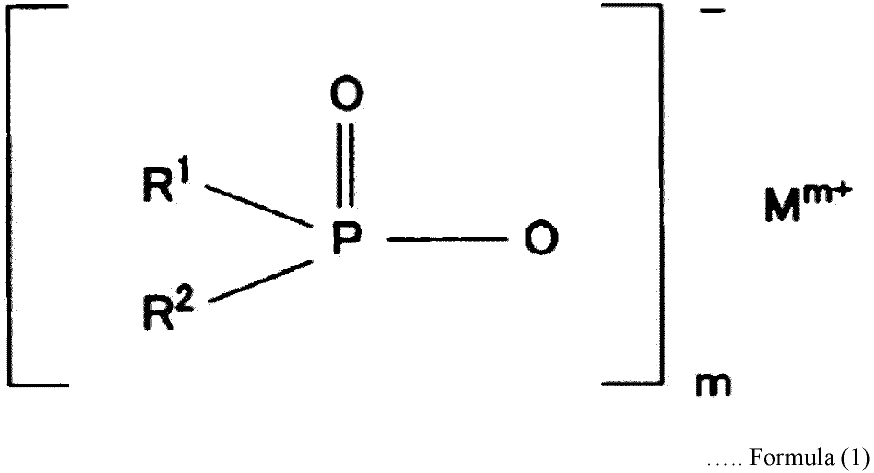
   (in Formula (1), R¹ and R² are each independently an alkyl group or an aryl group, M is at least one type selected from the group consisting of Mg, Ca, Al, Sb, Sn, Ge, Ti, Zn, Fe, Zr, Ce, Bi, Sr, Mn, Ni, Li, K, and Na, and m represents an integer of 1 to 4).
[16] The epoxy resin composition according to [15],
   wherein R¹ and R² are alkyl groups, M is Al, and m is 3 in Formula (1).
[17] The epoxy resin composition according to any one of [12] to [16],
   wherein a mass ratio of the component (A) to the component (B) (component (A)/component (B)) comprised in the epoxy resin composition is 0.05 to 0.5.
[18] The epoxy resin composition according to any one of [12] to [17],
   wherein the component (A) is comprised as 1 to 25 parts by mass with respect to 100 parts by mass of the epoxy resin composition.
[19] The epoxy resin composition according to any one of [12] to [18],
   wherein the component (B) is comprised as 20 to 50 parts by mass with respect to 100 parts by mass of the epoxy resin composition.
[20] The epoxy resin composition according to any one of [12] to [19], wherein the component (C) is comprised as 1 to 30 parts by mass with respect to 100 parts by mass of the epoxy resin composition.
[21] The epoxy resin composition according to any one of [12] to [20],
   wherein the component (D) is at least one type of compound selected from the group consisting of phenyldimethylurea, methylenebis(phenyldimethylurea), and tolylenebis(dimethylurea).

### [Advantageous Effects of Invention]

According to the present invention, it is possible to provide a prepreg that can shorten the combustion time when formed into a molded article and that has excellent flame retardancy, an epoxy resin composition that can be used as a matrix resin for the prepreg, and a molded article and a fiber-reinforced composite material that have excellent flame retardancy and a favorable external appearance.

### [Description of Embodiments]

In the present invention, an average particle size is a particle size corresponding to 50% of the volume-based cumulative distribution as measured by the laser diffraction particle size distribution measurement method.

In the present invention, a cured product obtained by curing an epoxy resin composition may be referred to as a "resin cured product" and, among the above, in particular, a plate-shaped cured product may be referred to as a "resin plate".

### [Prepreg]

A prepreg is formed by impregnating a carbon fiber base material with an epoxy resin composition.

### [Carbon Fiber Base Material]

The carbon fiber base material used for the prepreg contains carbon fibers.

The fiber diameter of the carbon fiber contained in the carbon fiber base material used for the prepreg is preferably 3 to 12 µm and more preferably 6 to 12 µm. When the fiber diameter of the carbon fibers is the lower limit value or higher, in processes for processing the carbon fibers, for example, such as combing and rolling, it is difficult for the carbon fibers to be cut or to be fluffed up when the carbon fibers move laterally and rub against each other or the carbon fibers and the roll surface or the like rub against each other. For this reason, it is possible to suitably manufacture a fiber-reinforced composite material with stable strength. When the fiber diameter of the carbon fibers is the upper limit value or lower, it is possible to manufacture the carbon fibers by a normal method.

From the viewpoint of the strength of the molded article, it is possible to set the volume content ratio of the carbon fibers in the prepreg (Vf) to, for example, 30% or more and 80% or less, or 40% or more and 70% or less.

The carbon fibers contained in the carbon fiber base material used for the prepreg may be carbon fiber bundles, in which case, the number of carbon fibers in the carbon fiber bundles is preferably 1000 to 70,000.

The strand tensile strength of the carbon fibers contained in the carbon fiber base material used for the prepreg is preferably 1.5 to 9 GPa from the viewpoint of the rigidity of the molded product.

The strand tensile elastic modulus of the carbon fibers contained in the carbon fiber base material used for the prepreg is preferably 150 to 260 GPa from the viewpoint of the rigidity of the molded product.

The strand tensile strength and strand tensile elastic modulus of carbon fibers are values measured in accordance with JIS R 7601:1986.

### [Epoxy Resin Composition]

One aspect of the epoxy resin composition contained in the prepreg and the epoxy resin composition (collectively referred to below as the "epoxy resin composition of the present invention" or simply the "epoxy resin composition") comprises the following component (A), component (B), and component (C). The epoxy resin composition may comprise the following component (D), component (E), or component (F). The epoxy resin composition preferably comprises the following component (A), component (B), component (C), and component (D).
Component (A): an organic phosphinate metal salt.
Component (B): an epoxy resin having an oxazolidone structure.
Component (C): an imidazole compound or an imidazole compound derivative.
Component (D): a urea compound.
Component (E): a dicyandiamide or a derivative thereof.
Component (F): at least one type of epoxy resin selected from novolac-type epoxy resins, naphthalene-type epoxy resins, and biphenyl-type epoxy resins.

### <Component (A)>

The component (A) is an organic phosphinate metal salt. The organic phosphinate metal salt increases the phosphorus content and makes it possible to efficiently impart flame retardancy to the molded product. In addition, since the hydrolyzability and thermal stability are excellent, the phenomenon of particles of the curing agent or the like bleeding out due to pressure or heat during processing occurs less easily.

The decomposition temperature of the organic phosphinate metal salt observed by DSC measurement is preferably 250°C or higher and more preferably 300°C or higher.

For the epoxy resin composition containing an organic phosphinate metal salt, for example, in the change in viscosity with respect to the shear rate, the range of change in viscosity at high shear rates is small and thus the coatability is excellent.

The organic phosphinate metal salt is preferably an organic phosphinate metal salt represented by Formula (1).

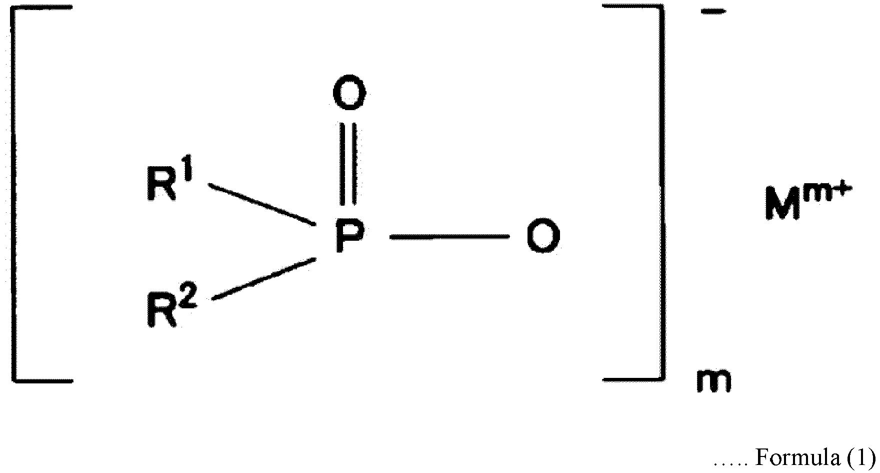

In Formula (1), R¹ and R² are each independently an alkyl group or an aryl group, M is at least one type selected from the group consisting of Mg, Ca, Al, Sb, Sn, Ge, Ti, Zn, Fe, Zr, Ce, Bi, Sr, Mn, Ni, Li, K, and Na, and m represents an integer of 1 to 4.

The alkyl groups of R¹ and R² may be linear or branched.

From the viewpoint of flame retardancy, alkyl groups are preferable as R¹ and R². From the viewpoint of flame retardancy, the alkyl group preferably has 1 to 20 carbon atoms and more preferably 1 to 6 carbon atoms. Specific examples thereof include a methyl group, an ethyl group, a propyl group, a butyl group, an isopropyl group, and a t-butyl group, and a methyl group and an ethyl group are particularly preferable.

From the viewpoint of flame retardancy, the aryl group preferably has 1 to 20 carbon atoms and more preferably 1 to 8 carbon atoms. Specific examples thereof include a phenyl group, a xylyl group, a tolyl group, and a naphthyl group, and a phenyl group is particularly preferable.

From the viewpoint of flame retardancy, M is preferably Al, Zn, or Ti, and more preferably Al.

Examples of the compound represented by Formula (1) include aluminum trisdiethylphosphinate, aluminum trismethylethylphosphinate, aluminum trisdiphenylphosphinate, zinc bisdiethylphosphinate, zinc bismethylethylphosphinate, zinc bisdiphenylphosphinate, titanyl bisdiethylphosphinate, titanyl bismethylethylphosphinate, and titanyl bisdiphenylphosphinate. In terms of obtaining an epoxy resin composition having high flame retardancy and moisture resistance, aluminum trisdiethylphosphinate and aluminum trismethylethylphosphinate are preferable.

The above may be used singly as one type or may be used in a combination of two or more types.

As the component (A), a commercially available product may be used, or a component synthesized by a known manufacturing method may be used. Examples of commercially available products of organic phosphinate metal salts and complexes thereof include Exolit OP930, OP935, OP945, and OP1230 (all trade names, manufactured by Clariant Japan Co., Ltd.), Fran CM-6R (manufactured by Daiwa Chemical Industries Co., Ltd.), without being limited thereto.

The average particle size of the organic phosphinate metal salt is preferably 50 µm or less, more preferably 20 µm or less, and even more preferably 10 µm or less. By setting the average particle size to the upper limit value or lower, it is possible to further improve the flame retardancy. In addition, there is a tendency for the fiber-reinforced composite material to have a favorable mechanical characteristics and a favorable external appearance. The average particle size of the organic phosphinate metal salt is preferably 20 µm or more. By being set to the lower limit value or higher, it is possible to easily adjust the viscosity of the epoxy resin composition. From the viewpoint of the dispersibility of the organic phosphinate metal salt, the average particle size is preferably 0.5 µm or more and more preferably 1.5 µm or more. For example, it is also possible to set the average particle size to 0.5 µm or more and 20 µm or less from the viewpoint of flame retardancy and to 20 µm or more and 50 µm or less from the viewpoint of manufacturing efficiency.

It is possible to adjust the average particle size of the organic phosphinate metal salt by crushing in advance with a bead mill or the like, or crushing with a triple roll mill or the like when blending with a liquid epoxy resin component or the like.

In a case of being used in a fiber-reinforced composite material, it is possible to selectively impart flame retardancy to the surface of the composite material by making the average particle size of the organic phosphinate metal salt larger than the average fiber diameter in the fiber-reinforced composite material. By making the average particle size of the organic phosphinate metal salt smaller than the average fiber diameter in the fiber-reinforced composite material, it is possible to selectively impart flame retardancy to the inside of the composite material.

The content of the component (A) with respect to 100 parts by mass of the epoxy resin composition is preferably 1 part by mass or more and more preferably 3 parts by mass or more since the flame retardancy of the resin cured product is further improved and a fiber-reinforced composite material with superior flame retardancy is easily obtained. Since an epoxy resin composition having a fast curing speed and a fiber-reinforced composite material having a favorable mechanical characteristics and a favorable external appearance are easily obtained, 25 parts by mass or less is preferable with respect to 100 parts by mass of the epoxy resin composition, 15 parts by mass or less is more preferable, and 10 parts by mass or less is even more preferable.

It is possible to arbitrarily combine the upper limit and lower limit described above. For example, 1 to 25 parts by mass is preferable, 1 to 15 parts by mass is more preferable, and 3 to 10 parts by mass is even more preferable.

From the viewpoint of flame retardancy, the content ratio of the component (A) to the component (B) (mass of component (A)/mass of component (B)) is preferably 0.05 or more and more preferably 0.1 or more. From the viewpoint of curability, the content ratio of the component (A) and the component (B) is preferably 0.5 or less and more preferably 0.3 or less.

It is possible to arbitrarily combine the upper limit and lower limit described above. For example, 0.05 to 0.5 is preferable and 0.1 to 0.3 is more preferable.

From the viewpoint of curability, the content ratio of the component (A) to the component (C) (mass of component (A)/mass of component (C)) is preferably 0.1 or more and more preferably 0.6 or more. From the viewpoint of the mechanical characteristics, the content ratio of the component (A) and the component (C) is preferably 15 or less and more preferably 10 or less.

It is possible to arbitrarily combine the upper limit and lower limit described above. For example, 0.1 to 15 is preferable and 0.6 to 10 is more preferable.

The epoxy resin composition contained in the prepreg and the epoxy resin composition may include a flame retardant other than the organic phosphinate metal salt which is the component (A). When the epoxy resin composition includes a flame retardant other than the organic phosphinate metal salt which is the component (A), the organic phosphinate metal salt may be contained at a ratio of 90% by mass or more of the total flame-retardant component. It is also possible to include no metal hydroxide.

The epoxy resin composition may include a halogen-based flame retardant and red phosphorus in addition to the organic phosphinate metal salt; however, from the viewpoint of reducing the influence on the environment, it is also possible to include no halogen-based flame retardant or red phosphorus.

### <Component (B)>

The component (B) is an epoxy resin having an oxazolidone structure. It is considered that, due to the steric contribution due to the presence of the oxazolidone structure in the matrix and the acceleration of curing due to the component (C), the cross-linking density of the resin cured product is set to a state in which the flame retardant can be uniformly present such that it is possible to suppress combustion even when combustion is carried out a plurality of times respectively and to improve flame retardancy. In addition, it is considered that nitrogen in the oxazolidone structure contributes to the formation of char together with the component (A) when the molded article is combusted. In addition, the heat resistance, fracture strain, and adhesiveness to reinforcing fibers of the resin cured product are increased and it is possible to obtain a fiber-reinforced plastic having excellent heat resistance and fracture strain.

The epoxy resin having an oxazolidone structure preferably includes an epoxy resin represented by Formula (2).

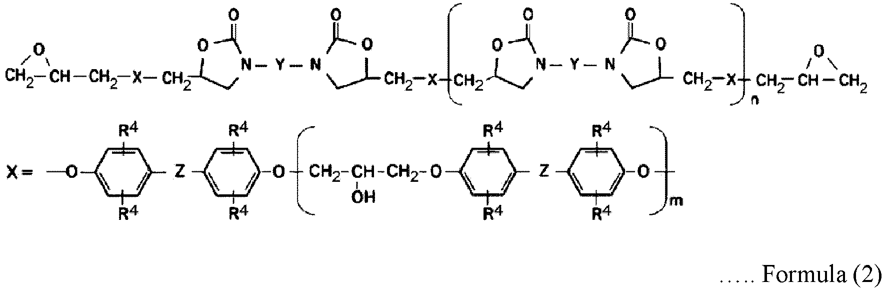

(In Formula (2), n and m are each independently an integer of 0 or more and Y represents a divalent group which may have a substituent group. Z represents a 5- to 8-membered cycloalkanediyl group having at least one substituent group selected from an alkyl group having 1 to 8 carbon atoms, an aryl group having 6 to 10 carbon atoms, and an aralkyl group having 6 to 10 carbon atoms, or represents an alkylene group having 1 to 8 carbon atoms. R⁴ is each independently a hydrogen atom, an alkyl group having 1 to 8 carbon atoms, an alkoxy group having 1 to 8 carbon atoms, an aryl group having 6 to 10 carbon atoms, an aralkyl group having 6 to 10 carbon atoms, an aryloxy group having 6 to 10 carbon atoms, or an aralkyloxy group having 6 to 10 carbon atoms.)

In Formula (2), examples of the alkylene group having 1 to 8 carbon atoms include -C(CH₃)₂-, -CH(CH₃)-, -CH₂-, and -C(CH₃)(CH₂CH₃)-, and -C(CH₃)₂- and -CH₂-are particularly preferable.

Examples of alkyl groups having 1 to 8 carbon atoms include a methyl group, an ethyl group, a propyl group, a butyl group, an isopropyl group, and a t-butyl group, and a methyl group and an ethyl group are particularly preferable.

Examples of alkoxy groups having 1 to 8 carbon atoms include a methoxy group and an ethoxy group.

Examples of aryl groups having 6 to 10 carbon atoms include a phenyl group, a xylyl group, and a tolyl group.

Examples of aralkyl groups having 6 to 10 carbon atoms include a benzyl group and a phenylethyl group.

Examples of aryloxy groups having 6 to 10 carbon atoms include a phenoxy group and a naphthyloxy group.

Examples of aralkyloxy groups having 6 to 10 carbon atoms include a benzyloxy group and a naphthylmethyloxy group.

From the viewpoint of heat resistance, n and m are preferably 0 to 5 and more preferably 0 to 3.

Examples of the divalent group represented by Y which may have a substituent group include groups represented by Formulas (2a) to (2k) and, among the foregoing, the group represented by (2a) and the group represented by (2c) are preferable.

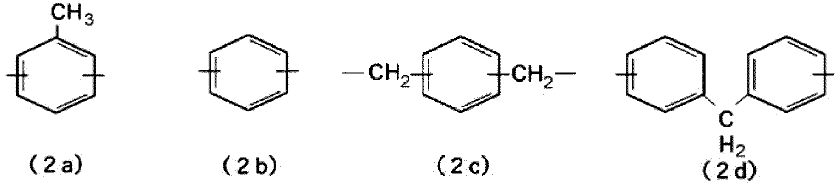

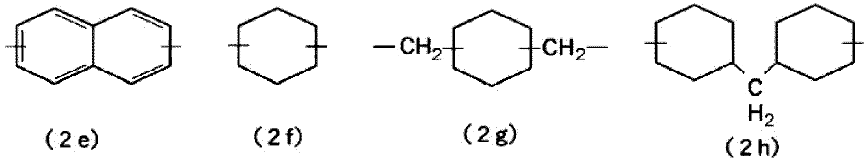

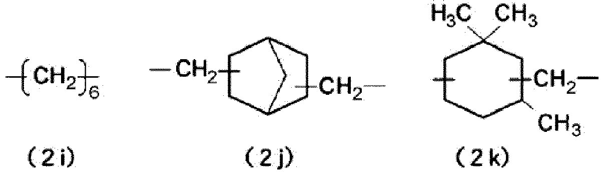

As Z, from the viewpoint of ease of availability, as a cycloalkane ring forming a cycloalkanediyl group substituted with at least one substituent group, a cyclopentane ring, a cyclohexane ring, a cycloheptane ring, and a cyclooctane ring are preferable and a cyclopentane ring and a cyclohexane ring are more preferable. As the substituent group of Z, a methyl group and a phenyl group are preferable from the viewpoint of physical properties such as adhesiveness.

From the viewpoint of ease of availability and physical properties such as heat resistance, a hydrogen atom, a 2-phenylethyl group, and a methyl group are preferable as R4.

From the viewpoint of strength and flame retardancy, in the epoxy resin represented by Formula (2), it is particularly preferable that Z is -C(CH₃)₂-, R⁴ is a hydrogen atom, m and n are 0, and Y is a group represented by (2a).

The oxazolidone structure is generated by an addition reaction of an isocyanate group and an epoxy group. The method for manufacturing the oxazolidone-type epoxy resin is not particularly limited and, for example, it is possible to obtain the oxazolidone-type epoxy resin by reacting an isocyanate compound and an epoxy resin in the presence of a catalyst used for forming an oxazolidone ring. The isocyanate compound and the epoxy resin are preferably reacted at an equivalent ratio (isocyanate compound:epoxy resin) in a range of 1:2 to 1:10. When the equivalent ratio of the isocyanate compound to the epoxy resin is within the above range, the resin cured product tends to have better heat resistance and water resistance.

Although the isocyanate compound which is the raw material of the component (B) is not particularly limited, an isocyanate compound having a plurality of isocyanate groups is preferable in order to incorporate the oxazolidone structure into the skeleton of the epoxy resin. In addition, a diisocyanate having a rigid structure is preferable in order for the resin cured product to have high heat resistance. Examples of isocyanate compounds include bifunctional isocyanate compounds such as methane diisocyanate, butane-1,1-diisocyanate, ethane-1,2-diisocyanate, butane-1,2-diisocyanate, transvinylene diisocyanate, propane-1,3-diisocyanate, butane-1,4-diisocyanate, 2-butene-1,4-diisocyanate, 2-methylbutene-1,4-diisocyanate, 2-methylbutane-1,4-diisocyanate, pentane-1,5-diisocyanate, 2,2-dimethylpentane-1,5-diisocyanate, hexane-1,6-diisocyanate, heptane-1,7-diisocyanate, octane-1,8-diisocyanate, nonane-1,9-diisocyanate, decane-1,10-diisocyanate, dimethylsilane diisocyanate, diphenylsilane diisocyanate, co,co'-1,3-dimethylbenzene diisocyanate, co,co'-1,4-dimethylbenzene diisocyanate, co,co'-1,3-dimethylcyclohexane diisocyanate, co,co'-1,4-dimethylcyclohexane diisocyanate, co,co'-1,4-dimethylnaphthalene diisocyanate, co,co'-1,5-dimethylnaphthalene diisocyanate, cyclohexane-1,3-diisocyanate, cyclohexane-1,4-diisocyanate, 3-isocyanatemethyl-3,5,5-trimethylcyclohexyl isocyanate, dicyclohexylmethane-4,4'-diisocyanate, 1,3-phenylene diisocyanate, 1,4-phenylene diisocyanate, 1-methylbenzene-2,4-diisocyanate, 1-methylbenzene-2,5-diisocyanate, 1-methylbenzene-2,6-diisocyanate, 1-methylbenzene-3,5-diisocyanate, diphenyl ether-4,4'-diisocyanate, diphenyl ether-2,4'-diisocyanate, naphthalene-1,4-diisocyanate, naphthalene-1,5-diisocyanate, biphenyl-4,4'-diisocyanate, 3,3'-dimethylbiphenyl-4,4'-diisocyanate, 2,3'-dimethoxybisphenyl-4,4'-diisocyanate, diphenylmethane-4,4'-diisocyanate, 3,3'-dimethoxydiphenylmethane-4,4'-diisocyanate, 4,4'-dimethoxydiphenylmethane-3,3'-diisocyanate, norbornene diisocyanate, and diphenylsulfite-4,4'-diisocyanate, diphenylsulfone-4,4'-diisocyanate; tri-functional or higher isocyanate compounds such as polymethylene polyphenyl isocyanate and triphenylmethane triisocyanate; multimers such as dimers and trimers of the above isocyanate compounds; and block isocyanates masked with alcohols and phenols, and bisurethane compounds, without being limited thereto.

These isocyanate compounds may be used singly as one type or in a combination of two or more types.

Among the isocyanate compounds described above, from the viewpoint that the heat resistance of the resin cured product tends to be further improved, bifunctional isocyanate compounds or trifunctional isocyanate compounds are preferable, bifunctional isocyanate compounds are more preferable, and bifunctional isocyanate compounds having a skeleton selected from isophorone, benzene, toluene, diphenylmethane, naphthalene, norbornene polymethylene polyphenylene polyphenyl, and hexamethylene are even more preferable. When the number of functional groups of the isocyanate compound is adequately large, the storage stability of the epoxy resin composition deteriorates less easily. When the number of functional groups of the isocyanate compound is adequately small, the heat resistance of the resin cured product decreases less easily.

Although it is possible to use various epoxy resins as the epoxy resin which is the raw material of the component (B), an epoxy resin having an epoxy group at both terminals of the molecule is preferable in order to efficiently incorporate the oxazolidone structure into the skeleton of the epoxy resin. Examples of epoxy resins include epoxy resins derived from divalent phenols such as bisphenol A type, bisphenol F type, bisphenol AD type, bisphenol S type, tetramethylbisphenol A type, tetramethylbisphenol F type, tetramethylbisphenol AD type, tetramethylbisphenol S type, tetrabromobisphenol A type, and biphenyl type; epoxy resins derived from tris(glycidyloxyphenyl)alkanes such as 1,1,1-tris(4-hydroxyphenyl)methane, 1,1,1-(4-hydroxyphenyl)ethane, 4,4-[1-[4-[1-(4-hydroxyphenyl)-1-methylethyl]phenyl]ethylidene]bisphenol, and the like; and novolac-derived epoxy resins such as phenol novolac type, cresol novolac type, and bisphenol A novolac-type, without being limited thereto.

These epoxy resins may be used singly as one type or in a combination of two or more types.

From the viewpoint of being able to suppress an excessive increase in the viscosity of the component (B), as the epoxy resin, bisphenol A-type epoxy resin, bisphenol F-type epoxy resin, and biphenyl-type epoxy resin are preferable.

As isocyanate compounds, an additional reaction product obtained by mixing and reacting one molecule of bifunctional isocyanate having a toluene skeleton such as tolylene diisocyanate (for example, 1-methylbenzene-2,4-diisocyanate, 1-methylbenzene-2,5-diisocyanate, 1-methylbenzene-2,6-diisocyanate, 1-methylbenzene-3,5-diisocyanate) and 2 molecules of bisphenol A diglycidyl ether as an epoxy resin is particularly preferable in order to improve the workability of the prepreg at normal temperatures and the heat resistance of the resin cured product.

Examples of commercially available products of the component (B) include AER4152, AER4151, LSA3301, and LSA2102 (all trade names, manufactured by Asahi Kasei E-Materials Corp.); ACR1348 (trade name, manufactured by ADEKA Corp.); DER (registered trademark, same applies below) 852 and 858 (both trade names, manufactured by Dow Chemical Japan Ltd.); TSR-400 (trade name, manufactured by DIC Corp.); and YD-952 (trade name, manufactured by Nippon Steel Chemical & Material Co., Ltd.). Any one may be preferably used, but YD-952 is particularly preferable.

The component (B) may be used singly as one type or in a combination of two or more types.

The content of the component (B) with respect to 100 parts by mass of the epoxy resin composition is preferably 20 parts by mass or more and more preferably 25 parts by mass or more as this tends to improve adhesiveness to carbon fibers and flame retardancy due to the mechanical characteristics of the resin cured product and the oxazolidone structure and a fiber-reinforced plastic that satisfies both of the flame retardancy and the mechanical characteristics is obtained. 50 parts by mass or less with respect to 100 parts by mass of the epoxy resin composition is preferable and 45 parts by mass or less is more preferable since it is possible to obtain a prepreg with excellent tackiness and drape properties and to obtain a resin cured product with high fracture strain and no voids.

It is possible to arbitrarily combine the upper limit and lower limit described above. For example, 20 to 50 parts by mass is preferable and 25 to 45 parts by mass is more preferable.

### <Component (C)>

The component (C) is an imidazole compound or an imidazole compound derivative. From the viewpoint of improving storage stability and the curing speed in molding, an imidazole compound or an imidazole compound derivative having a curing initiation temperature of 100°C or higher is preferable. The curing initiation temperature is more preferably 110°C or higher and can be set to 180°C or lower.

For the curing initiation temperature, using a sample resin composition prepared by adding 10 parts by mass of an imidazole compound or an imidazole compound derivative to 100 parts by mass of a bisphenol A-type epoxy resin with an epoxy equivalent amount of 180 to 220 and carrying out mixing, the calorific value is measured by a differential scanning calorimeter (DSC) at a temperature increase rate of 10°C/min and the temperature at the intersection of the tangent line at the inflection point of the obtained DSC curve and the baseline is used.

The imidazole compound or imidazole compound derivative has a nitrogen atom having unshared electron pair in the structure thereof and this activates the epoxy group and accelerates curing.

The imidazole compound derivative may be at least one type of derivative selected from the group consisting of an imidazole adduct of am imidazole compound, inclusion imidazole, microcapsule-type imidazole, and an imidazole compound coordinated with a stabilizer.

Examples of imidazole compounds include 2,4-diamino-6-[2'-methylimidazolyl-(1')]-ethyl-s-triazine, 1-cyanoethyl-2-phenylimidazolium trimellitate, 2-phenyl-4,5-dihydroxymethylimidazole, and 2-phenyl-4-methyl-5-hydroxymethylimidazole.

Examples of imidazole compounds prior to an adduct treatment, an inclusion treatment with a heteromolecule, a microcapsule treatment, or stabilizer coordination include, in addition to the above, 2-methylimidazole, 2-ethyl-4-methylimidazole, 2-undecylimidazole, 2-heptadecylimidazole, 1,2-dimethylimidazole, 2-phenylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-ethyl-4-methylimidazolium trimellitate, 1-cyanoethyl-2-undecylimidazolium trimellitate, 1-cyanoethyl-2-phenylimidazolium trimellitate, 2,4-diamino-6-(2'-methylimidazolyl-(1'))-ethyl-s-triazine, 2,4-diamino-6-(2'-undecylimidazolyl-(1'))-ethyl-s-triazine, 2,4-diamino-6-(2'-ethyl-4-methylimidazolyl-(1'))-ethyl-s-triazine, 2,4-diamino-6-(2'-methylimidazolyl-(1'))-ethyl-s-triazine isocyanuric acid adducts, 2-phenylimidazole/isocyanuric acid adducts, 2-methylimidazole/isocyanuric acid adducts, 1-cyanoethyl-2-phenyl-4,5-di(2-cyanoethoxy)methylimidazole, 2-phenyl-4,5-dihydroxymethylimidazole, and 2-phenyl-4-methyl-5-hydroxymethylimidazole, without being limited thereto.

Examples of commercially available products of imidazole compounds include 2MZ-A, 2MZA-PW, 2E4MZ-A, 2MZ, 2PZ, 2E4MZ, and 2PHZ (all trade names, manufactured by Shikoku Chemicals Corporation), without being limited thereto.

Examples of commercially available products of imidazole adducts having a structure in which an imidazole compound is added to an epoxy group of an epoxy resin by ring-opening addition include PN-50, PN-50J, PN-40, PN-40J, PN-31, PN-23, and PN-H (all trade names, manufactured by Ajinomoto Fine-Techno Co., Inc.), without being limited thereto.

Examples of commercially available products of inclusion imidazole include TIC-188, KM-188, HIPA-2P4MHZ, NIPA-2P4MHZ, TEP-2E4MZ, HIPA-2E4MZ, and NIPA-2E4MZ (all trade names, manufactured by Nippon Soda Co., Ltd.), without being limited thereto.

Examples of commercially available products of microcapsule-type imidazole include NOVACURE HX3721, HX3722, HX3742, and HX3748 (trade names, manufactured by Asahi Kasei E-Materials Corp.); LC-80 (trade name, manufactured by A&C Catalysts), without being limited thereto.

Examples of commercially available products of imidazole coordinated with a stabilizer include CUREDUCT P-0505 and CUREDUCT L-07N (trade names, manufactured by Shikoku Chemicals Corporation), without being limited thereto.

From the viewpoint of accelerating curing, the content of the component (C) with respect to 100 parts by mass of the epoxy resin composition is preferably 1 part by mass or more and more preferably 2 parts by mass or more. Since a resin cured product having superior flame retardancy, heat resistance, and mechanical characteristics is obtained, 30 parts by mass or less with respect to 100 parts by mass of the epoxy resin composition is preferable and 25 parts by mass or less is more preferable.

It is possible to arbitrarily combine the upper limit and lower limit described above. For example, 1 to 30 parts by mass is preferable and 2 to 25 parts by mass is more preferable.

When the content of the component (C) is the lower limit value or more, the curing acceleration effect on the epoxy resin included in the epoxy resin composition is sufficiently obtained. On the other hand, when the content is the upper limit value or less, it is possible to obtain a resin cured product having superior flame retardancy, heat resistance, and mechanical characteristics.

### <Component (D)>

The component (D) is a urea compound. The urea compound generates an isocyanate group and amines upon being heated at a high temperature and the heat generated by the reaction of the above with the epoxy group further accelerates the reaction between -NH of the component (C) and component (E) and the epoxy group. From the viewpoint of flame retardancy, it is considered that nitrogen in the urea compound contributes to the formation of char together with the component (A) when the molded article is combusted.

The urea compound is not particularly limited, but examples thereof include aromatic dimethylurea in which a dimethylureido group is bonded to an aromatic ring, aliphatic dimethylurea in which a dimethylureido group is bonded to an aliphatic compound, and the like. Among the above, aromatic dimethyl urea is preferable in terms of increasing the curing speed.

As the aromatic dimethylurea, for example, it is possible to suitably use phenyldimethylurea, methylenebis(phenyldimethylurea), and tolylenebis(dimethylurea), which may each be substituted. Examples thereof include 4,4'-methylenebis(phenyldimethylurea) (MBPDMU), 3-phenyl-1,1-dimethylurea (PDMU), 3-(3,4-dichlorophenyl)-1,1-dimethylurea (DCMU), 3-(3-chloro-4-methylphenyl)-1,1-dimethylurea, and 2,4-bis(3,3-dimethylureido)toluene (TBDMU). From the viewpoint of the curing acceleration effect with the component (C), at least one type of compound selected from the group consisting of phenyldimethylurea, methylenebis(phenyldimethylurea), and tolylenebis(dimethylurea) is more preferable.

The above may be used singly as one type or in a combination of two or more types.

Examples of aliphatic dimethylurea include dimethylurea obtained from isophorone diisocyanate and dimethylamine, dimethylurea obtained from m-xylylenediisocyanate and dimethylamine, and dimethylurea obtained from hexamethylene diisocyanate and dimethylamine.

A commercially available product may be used as the component (D). Examples of commercially available products of PDMU include Omicure94 (the above is manufactured by PTI Japan Ltd.), without being limited thereto.

From the viewpoint of curing acceleration, the content of the component (D) with respect to 100 parts by mass of the epoxy resin composition is preferably 0.5 parts by mass or more and more preferably 1 part by mass or more. Since a resin cured product having superior flame retardancy, heat resistance, and mechanical characteristics is obtained, 15 parts by mass or less with respect to 100 parts by mass of the epoxy resin composition is preferable, 10 parts by mass or less is more preferable, and 5 parts by mass or less is even more preferable. The content of the component (D) is preferably less than that of the component (C).

It is possible to arbitrarily combine the upper limit and lower limit described above. For example, 0.5 to 15 parts by mass is preferable, 0.5 to 10 parts by mass is more preferable, and 1 to 5 parts by mass is even more preferable.

### <Component (E)>

The component (E) is dicyandiamide or a dicyandiamide derivative. Dicyandiamide and derivatives thereof have a high melting point and low compatibility with epoxy resins in a low temperature range. In addition, the epoxy resin composition including the component (E) makes it possible to obtain an epoxy resin composition having an excellent pot life and to obtain a resin cured product having high mechanical characteristics.

Examples of derivatives of dicyandiamide include derivatives obtained by bonding dicyandiamide with epoxy resins or various compounds such as vinyl compounds, acrylic compounds, and 9,10-dihydro-9-oxa-10-phosphaphenanthrene-10-oxide.

The above may be used singly as one type or in a combination of two or more types. In addition, the above may also be used in combination with dicyandiamide.

In terms of reactivity, dicyandiamide is preferable as the component (E). In addition, commercially available products may be used as the component (E). Examples of commercially available products of dicyandiamide include DICY7 and DICY15 (the above are manufactured by Mitsubishi Chemical Corp.) and Dicyanex1400F (manufactured by Evonik Japan Co., Ltd.), without being limited thereto.

From the viewpoint of curing acceleration, the content of the component (E) with respect to 100 parts by mass of the epoxy resin composition is preferably 1 part by mass or more and more preferably 2 parts by mass or more. From the viewpoint of the toughness of the cured product, the content is preferably 15 parts by mass or less with respect to 100 parts by mass of the epoxy resin composition and more preferably 14 parts by mass or less.

It is possible to arbitrarily combine the upper limit and lower limit described above. For example, 1 to 15 parts by mass is preferable and 2 to 14 parts by mass is more preferable.

### <Component (F)>

The component (F) is at least one type of epoxy resin selected from novolac-type epoxy resins, naphthalene-type epoxy resins, and biphenyl-type epoxy resins. By including the component (F) in the epoxy resin composition, it is possible to favorably maintain the heat resistance of the resin cured product. Additionally, the fast curing properties of the epoxy resin composition are improved and it is possible to obtain a prepreg for which the curing is completed in a short period of time even at low temperatures.

Examples of novolac-type epoxy resins include phenol novolac-type epoxy resins and cresol novolac-type epoxy resins.

Examples of commercially available products of phenol novolac-type epoxy resins include jER (registered trademark) 152 and 154 (both trade names, manufactured by Mitsubishi Chemical Corp.); and EPICLON (registered trademark) N-740 and N-775 (both trade names, manufactured by DIC Corp.).

Examples of commercially available products of cresol novolac-type epoxy resins include EPICLON (registered trademark) N-660 and N-665 (both trade names, manufactured by DIC Corp.); EOCN-1020 and EOCN-102S (both trade names, manufactured by Nippon Kayaku Co., Ltd.); and YDCN-700 and YDCN-701 (both trade names, manufactured by Nippon Steel Chemical & Material Co., Ltd.).

Examples of commercially available products of naphthalene-type epoxy resins include HP-4032 and HP-4700 (both trade names, manufactured by DIC Corp.); and NC-7300 (trade name, manufactured by Nippon Kayaku Co., Ltd.).

Examples of commercially available products of biphenyl-type epoxy resins include YX4000 and YX4000L (both trade names, manufactured by Mitsubishi Chemical Corp.), and NC-3000 (trade name, manufactured by Nippon Kayaku Co., Ltd.).

The component (F) may be used singly as one type or in a combination of two or more types.

The content of the component (F) with respect to 100 parts by mass of the epoxy resin composition is preferably 5 to 35 parts by mass, more preferably 10 to 30 parts by mass, and particularly preferably 20 to 30 parts by mass. When the content of the component (F) is the lower limit value or more, the heat resistance of the resin cured product tends to be improved and it is possible to obtain a fiber-reinforced composite resin molded product having excellent heat resistance. Additionally, the fast curing properties of the epoxy resin composition are improved and it is possible to obtain a prepreg for which the curing is completed in a short period of time even at low temperatures. On the other hand, when the content is the upper limit value or less, the mechanical characteristics of the resin cured product tend to be improved and it is possible to obtain a fiber-reinforced composite resin molded product having excellent mechanical characteristics. Additionally, it tends to be possible to obtain a resin cured product having a high fracture strain and no voids. In addition, it is possible to suppress an excessive increase in the viscosity of the epoxy resin composition and to facilitate the preparation of the epoxy resin composition.

### (Other Optional Components)

Examples of other optional components included in the epoxy resin composition included in the prepreg and in the epoxy resin composition include epoxy resins other than the component (B) and the component (F) (referred to below as "other epoxy resins"), thermoplastic resins, and additives.

Examples of other epoxy resins include bifunctional epoxy resins such as bisphenol A-type epoxy resins, bisphenol F-type epoxy resins, and epoxy resins in which these are modified; and trifunctional or higher epoxy resins such as glycidylamine-type epoxy resins and epoxy resins in which these epoxy resins are modified.

Other epoxy resins may be used singly as one type or in a combination of two or more types.

Examples of commercially available products of bifunctional epoxy resins include the following.

Examples of commercially available products of bisphenol A-type epoxy resins include jER (registered trademark) 825, 826, 827, 828, 834, and 1001 (all trade names, manufactured by Mitsubishi Chemical Corp.); EPICLON (registered trademark) 850 (trade name, manufactured by DIC Corp.); Epotohto (registered trademark) YD-128 (trade name, manufactured by Nippon Steel Chemical & Material Co., Ltd.); DER (registered trademark) 331 and 332 (both trade names, manufactured by Dow Chemical Japan Ltd.); and EPR154 from Bakelite (registered trademark), EPR162, EPR172, EPR173, and EPR174 (both trade names, manufactured by Bakelite AG).

Examples of commercially available products of bisphenol F type epoxy resins include jER (registered trademark) 806, 807, and 1750 (all trade names, manufactured by Mitsubishi Chemical Corp.); EPICLON (registered trademark) 830 (trade name, manufactured by DIC Corp.); Epotohto (registered trademark) YD-170 and YD-175 (both trade names, manufactured by Nippon Steel Chemical & Material Co., Ltd.); Bakelite (registered trademark) EPR169 (trade name, manufactured by Bakelite AG); and GY281, GY282, and GY285 (all trade names, manufactured by Huntsman Advanced Materials).

Examples of commercially available products of trifunctional or higher epoxy resins include the following.

Examples of commercially available products of glycidylamine-type epoxy resins include jER (registered trademark) 630 (trade name, manufactured by Mitsubishi Chemical Corp.); MY0500, MY0510, and MY0600 from ARALDITE (registered trademark) (all trade names, manufactured by Huntsman Advanced Materials).

Examples of thermoplastic resins include polyamide, polyester, polycarbonate, polyether sulfone, polyphenylene ether, polyphenylene sulfide, polyether ether ketone, polyether ketone, polyetherimide, polyimide, polytetrafluoroethylene, polyether, polyolefin, a liquid crystal polymer, polyarylate, polysulfone, polyacrylonitrile styrene, polystyrene, polyacrylonitrile, polymethyl methacrylate, an acrylonitrile-butadienestyrene copolymer (ABS resin), an acrylonitrile-ethylene-propylene-diene-styrene copolymer (AES resin), an acrylonitrile-styrene-alkyl (meth)acrylate copolymer (ASA resin), polyvinyl chloride, polyvinyl formal, a phenoxy resin, and a block polymer, without being limited thereto. The thermoplastic resin may be used singly as one type or in a combination of two or more types.

Among thermoplastic resins, from the viewpoint of excellent resin flow controllability and the like, a phenoxy resin, polyether sulfone, polyether imide, polyvinyl formal, and a block polymer are preferable. In particular, when a phenoxy resin, polyether sulfone, and polyether imide are used, the heat resistance and flame retardancy of the resin cured product are further improved. When polyvinyl formal is used, it is possible to easily control the tackiness of the obtained prepreg within an appropriate range without impairing the heat resistance of the resin cured product. Additionally, the adhesiveness between the reinforcing fibers and the resin cured product is further improved. When a block polymer is used, the toughness and impact resistance of the resin cured product are improved.

Examples of commercially available products of phenoxy resins include YP-50, YP-50S, YP70, ZX-1356-2, and FX-316 (all trade names, manufactured by Nippon Steel Chemical & Material Co., Ltd.), without being limited thereto.

Examples of commercially available products of polyvinyl formal include Vinylec (registered trademark) K (number average molecular weight: 59,000), L (number average molecular weight: 66,000), H (number average molecular weight: 73,000), and E (number average molecular weight: 126,000) (all trade names, manufactured by JNC Corporation), without being limited thereto.

When a heat resistance of greater than 180°C is necessary for the resin cured product, polyether sulfone and polyether imide are preferably used as the thermoplastic resin. Examples of commercially available products of polyether sulfone include SUMIKAEXCEL (registered trademark) 3600P (number average molecular weight: 16,400), 5003P (number average molecular weight: 30,000), 5200P (number average molecular weight: 35,000), and 7600P (number average molecular weight: 45,300) (all trade names, manufactured by Sumitomo Chemical Co., Ltd.), without being limited thereto.

Examples of commercially available products of polyether imide include ULTEM (registered trademark) 1000 (number average molecular weight: 32,000), 1010 (number average molecular weight: 32,000), and 1040 (number average molecular weight: 20,000) (all trade names, manufactured by SABIC Innovative Plastics Japan LLC), without being limited thereto.

Examples of commercially available products of block polymers include Nanostrength (registered trademark) M52, M52N, M22, M22N, 123, 250, 012, E20, and E40 (all trade names, manufactured by ARKEMA); TPAE-8, TPAE-10, TPAE-12, TPAE-23, TPAE-31, TPAE-38, TPAE-63, TPAE-100, and PA-260 (all trade names, manufactured by T&K TOKA Co., Ltd.), without being limited thereto.

Examples of additives include curing accelerators for epoxy resins, inorganic fillers, internal release agents, organic pigments, and inorganic pigments. The epoxy resin composition may include known additives, as necessary, in a range in which the effects of the present invention are not impaired.

Examples of additives include a phosphorus-based flame retardant other than the component (A) (for example, a phosphorus-containing epoxy resin, red phosphorus, a phosphazene compound, a phosphate, a phosphate ester, and the like), a hydrated metal compound as an inorganic flame retardant (aluminum hydroxide, magnesium hydroxide, and the like), inorganic oxide and other auxiliary agents (an antimony compound, zinc borate, zinc stannate, a Mo compound, ZrO, zinc sulfide, zeolite, a titanium oxide nanofiller, and the like), silicone oil, wetting and dispersing agents, antifoaming agents, defoaming agents, natural waxes, synthetic waxes, metal salts of straight-chain fatty acids, acid amides, esters, release agents such as paraffins, powders such as crystalline silica, fused silica, silicic acid calcium, alumina, calcium carbonate, talc, and barium sulfate, inorganic fillers such as glass fiber and carbon fiber, coloring agents such as carbon black and red iron oxide, silane coupling agents, and the like.

The above may be used singly as one type or in a combination of two or more types.

### <Method for Manufacturing Epoxy Resin Composition>

The epoxy resin composition is obtained, for example, by mixing each of the components described above. Examples of methods for mixing each component include a method using a mixer such as a three-roll mill, a planetary mixer, a kneader, a homogenizer, and a homodisper.

For example, as described below, it is possible to use the epoxy resin composition for manufacturing a prepreg by impregnating an aggregate of reinforcing fibers (reinforcing fiber substrate). Alternatively, it is possible to obtain a film of the epoxy resin composition by coating the epoxy resin composition on release paper or the like and carrying out curing.

When the viscosity of the epoxy resin composition at 30°C is 100 to 1,000,000 Pa s, the prepreg surface tackiness adjustment and workability are excellent.

### <Reinforcing Fibers>

The reinforcing fibers are present as a reinforcing fiber substrate in the prepreg and are preferably in the form of a sheet. The reinforcing fibers may be reinforcing fibers arranged in one direction or arranged in random directions. Examples of the form of the reinforcing fibers include woven reinforcing fibers, nonwoven reinforcing fibers, and a sheet in which the long fibers of the reinforcing fibers are aligned in one direction. From the viewpoint of being able to mold a fiber-reinforced composite material with a high specific strength and a high specific modulus, the reinforcing fibers are preferably a sheet formed of a bundle of reinforcing fibers in which the long fibers are aligned in one direction and, from the viewpoint of ease of handling, woven reinforcing fibers are preferable.

Examples of materials for the reinforcing fibers include glass fibers, carbon fibers, aramid fibers, boron fibers, and the like. From the viewpoint of mechanical characteristics and weight reduction of the fiber-reinforced composite material, carbon fibers are preferable as the reinforcing fibers. Carbon fiber has a higher thermal conductivity than, for example, glass fiber, thus, when the molded article is ignited, the temperature rises quickly, therefore, it is possible for the nitrogen in the matrix resin component of the fiber-reinforced composite material to form char along with the component (A) in a short time after the ignition, which is considered to be effective in shortening the combustion time.

### <Prepreg Manufacturing Method>

A prepreg, for example, is formed by impregnating a carbon fiber base material with an epoxy resin composition.

Examples of methods for impregnating the reinforcing fiber substrate with the epoxy resin composition include a wet method in which the epoxy resin composition is dissolved in a solvent such as methyl ethyl ketone or methanol to reduce the viscosity and then impregnated into an aggregate of reinforcing fibers, a hot-melt method (dry method) in which an aggregate of reinforcing fibers is impregnated after reducing the viscosity of the epoxy resin composition by heating, and the like, without being limited thereto.

The wet method is a method in which an aggregate of reinforcing fibers is immersed in a solution of an epoxy resin composition, then pulled out, and the solvent is evaporated using an oven or the like.

Hot-melt methods include a method in which an aggregate of reinforcing fibers is directly impregnated with an epoxy resin composition for which the viscosity was reduced by heating, and a method in which an epoxy resin composition is temporarily coated on the surface of a base material such as release paper to produce a film, then the film is stacked from one side or both sides of the reinforcing fiber aggregate, and the aggregate of reinforcing fibers is impregnated with resin by applying heat and pressure thereto. A coating layer obtained by coating the surface of a base material such as a release paper may be used in the hot-melt method without carrying out curing, or may be used in the hot-melt method after curing the coating layer. The hot-melt method is preferable because substantially no solvent remains to be present in the prepreg.

The content of the epoxy resin composition in the prepreg (referred to below as the "resin content") is preferably 15 to 50% by mass with respect to the total mass of the prepreg, more preferably 20 to 45% by mass, and even more preferably 25 to 40% by mass. When the resin content is the lower limit value or more, it is possible to sufficiently secure the adhesiveness between the reinforcing fibers and the epoxy resin composition and, when the resin content is the upper limit value or less, the mechanical characteristics of the fiber-reinforced composite resin molded product are further improved.

### <Fiber-reinforced composite material>

The fiber-reinforced composite material is a cured product of a prepreg and preferably a cured product of a laminate in which two or more prepregs are laminated. That is, the fiber-reinforced composite material includes a cured product of an epoxy resin composition and reinforcing fibers, which are included in a prepreg. The fiber-reinforced composite material is formed and obtained, for example, by a method such as laminating two or more of the prepregs described above and then heating and curing the epoxy resin composition while applying pressure to the obtained laminate.

Examples of molding methods include press molding methods, autoclave molding methods, bagging molding methods, wrapping tape methods, internal pressure molding methods, sheet wrap molding methods, Resin Transfer Molding (RTM) in which a molded article is obtained by impregnating reinforcing fiber filaments and preforms with an epoxy resin composition and carrying out curing, Vacuum Assisted Resin Transfer Molding Method (VaRTM), filament winding, Resin Film Infusion (RFI), and the like, without being limited to these methods. Among the above, the press molding method is preferable from the viewpoint that it is possible to sufficiently realize the characteristics of the epoxy resin composition, the productivity is high, and a high-quality fiber-reinforced composite material is easily obtained.

In a case of manufacturing a fiber-reinforced composite material by the press molding method, a prepreg or a laminate produced by laminating prepregs is preferably interposed between metal molds prepared at a curing temperature in advance and heated and pressed to cure the prepreg or laminate. The temperature in the metal molds during press molding is preferably 100 to 160°C. In addition, it is preferable to cure the prepreg or laminate for 1 to 20 minutes under conditions of 1 to 15 MPa.

### <Application>

Since the matrix resin is a cured product of an epoxy resin composition, the fiber-reinforced composite material has excellent flame retardancy even without containing a halogen-based flame retardant, red phosphorus, and phosphate esters. Accordingly, fiber-reinforced composite material are useful in applications requiring a high flame-retardant performance, for example, in electrical and electronic housing materials, aircraft interior materials, and the like. Application is possible to housings for electrical and electronic equipment such as laptop computers, interior materials for aircraft and automobiles, and the like. In addition, suitable use is possible in sports applications, general industrial applications and aerospace applications.

### [Examples]

A specific description will be given below of the present invention with reference to Examples, but the present invention is not limited thereto. The raw materials used in the Examples and Comparative Examples are shown below.

### [Material]

### <Component (A)>

- OP-935: Trisdiethylphosphinate aluminum salt, phosphorus atom content 23.0% by mass, average particle size 2 to 3 µm, maximum particle size less than 10 µm, "Exolit OP935" manufactured by Clariant Japan Co., Ltd.

### <Component (B)>

- YD952: Oxazolidone-type epoxy resin, "YD-952" manufactured by Nippon Steel Chemical & Material Co., Ltd. In Formula (2), there is contained a compound having a structure in which Z is -C(CH₃)₂-, R⁴ is a hydrogen atom, m and n are 0, and Y is a group represented by (2a).

### <Component (C)>

- 2MZA-PW: 2,4-diamino-6-[2'-methylimidazolyl-(1')]-ethyl-s-triazine, "2MZA-PW" manufactured by Shikoku Chemicals Corporation.

### <Component (D)>

- Omicure94: Phenyldimethylurea, "Omicure94" manufactured by PTI Japan Ltd.

### <Component (E)>

- Dicyanex1400F: Dicyandiamide, "Dicyanex1400F" manufactured by Evonik Japan Co., Ltd.
- DICY15: Dicyandiamide, "jER Cure DICY15" manufactured by Mitsubishi Chemical Corp.

### <Component (F)>

- YDPN638: Phenol novolac-type epoxy resin, epoxy equivalent 180 g/eq, "YDPN-638" manufactured by Nippon Steel Chemical & Material Co., Ltd.
- N-690: Cresol novolac-type epoxy resin, epoxy equivalent 214 g/eq, "N-690" manufactured by DIC Corp.

### <Others>

- HP4770: Naphthalene type epoxy resin, epoxy equivalent 204 g/eq, "HP-4770" manufactured by DIC Corp.
- NC3000: Biphenyl type epoxy resin, epoxy equivalent 265 to 285g/eq, "NC-3000" manufactured by Nippon Kayaku Co., Ltd.
- jER604: N,N,N',N'-tetraglycidyldiaminodiphenylmethane, epoxy equivalent 120 g/eq, "jER 604" manufactured by Mitsubishi Chemical Corp.
- jER828: Liquid bisphenol A type epoxy resin, epoxy equivalent 189 g/eq, "jER 828" manufactured by Mitsubishi Chemical Corp.
- YD128: Liquid bisphenol A type epoxy resin, epoxy equivalent 189 g/eq, "YD-128" manufactured by Nippon Steel Chemical & Material Co., Ltd.
- jER807: Liquid bisphenol F type epoxy resin, epoxy equivalent 168 g/eq, "jER 807" manufactured by Mitsubishi Chemical Corp.
- TOP: Tricresyl phosphate, "TOP" manufactured by Daihachi Chemical Industry Co., Ltd.

### <Carbon Fibers>

- Carbon fibers: "PYROFIL TR50S15L" manufactured by Mitsubishi Chemical Corp.

### Examples 1 to 5, Experimental Examples 1 to 6

According to each of the formulations shown in Table 1, jER 828 and jER 807 (liquid) and the component (E) (solid), the component (D) (solid), and the component (C) (solid) were weighed into a container such that the solid components and the liquid components had a mass ratio of 1:1, stirred, and mixed. The above were further finely mixed in a three-roll mill to obtain a curing agent master batch. Subsequently, among the formulations shown in Table 1, components other than the component (A) and the curing agent master batch were weighed into a flask, heated to 120°C using an oil bath, and dissolved and mixed. Thereafter, while cooling to approximately 65°C, the component (A) was added thereto, stirred, mixed, and then, when cooled to approximately 65°C, the curing agent master batch was added thereto, stirred, and mixed to obtain an epoxy resin composition.

Using the obtained epoxy resin composition, a resin plate was produced according to the method for producing an epoxy resin plate described below. In addition, various measurements and evaluations were performed according to the evaluation methods described below. Table 2 shows the results.

### [Method for Producing Epoxy Resin Plate]

After curing the uncured epoxy resin composition at an oven atmosphere temperature of 70°C for 10 minutes, curing was carried out at 140°C for 40 minutes (heating rate: 10°C/min) to produce a resin plate with a thickness of 2 mm.

### [Evaluation Method]

### UL-94V Combustion Test of Resin Plate

The resin plate with a thickness of 2 mm obtained by the epoxy resin plate production method was processed into a length of 127 mm and a width of 12.7 mm to obtain a test piece. The test piece was subjected to a combustion test according to the UL-94V standard using a combustion tester (manufactured by Suga Test Instruments Co., Ltd.). Specifically, the test piece was vertically attached to a clamp, subjected to flame contact with a 20 mm flame for 10 seconds, and the combustion time was measured. A combustion test was performed on five test pieces and the number of samples that combusted up to the clamp, the maximum value (max) of each combustion time, and the sum of the five combustion times (total combustion time: total) were recorded.

### Calculation of Curing Time

The torque value of the uncured epoxy resin composition of Example 5 was continuously measured using a Curlastometer (manufactured by JSR Trading Co., Ltd., "Curlastometer 7 (Type P)") and, by determining the change in the viscoelastic stress during the curing reaction, the degree of curing and the curing time were measured. The time for obtaining a torque value of 90% of the maximum torque value was set as the complete curing time. The complete curing time was 3.7 minutes.

### [Production of Prepreg]

A prepreg was obtained by impregnating carbon fibers aligned in one direction with the resin composition produced in Example 1. The obtained prepreg had appropriate tackiness and hardness and was excellent in workability. The prepreg had a carbon fiber areal weight of 125 g/m² and a resin content of 40% by mass.

### [Production of Plate formed of Fiber-reinforced composite material]

The obtained prepreg was cut to 300 mm x 300 mm and laminated by the hand layup method. Each of the prepreg layers were laminated such that the longitudinal directions of the reinforcing fibers were perpendicular to each other. The curing conditions were 130°C for 90 minutes (heating rate: 2°C/min) using an autoclave. A plate formed of a fiber-reinforced composite material (fiber-reinforced composite material plate) having a thickness of 0.5 mm was produced.

### [UL-94V Combustion Test of Fiber-reinforced composite material]

A test piece formed by processing the obtained fiber-reinforced composite material plate having a thickness of 0.5 mm into a length of 127 mm and a width of 12.7 mm was subjected to a combustion test using a combustion tester (manufactured by Suga Test Instruments Co., Ltd.) in accordance with UL-94V standards. Specifically, the test piece was vertically attached to a clamp, subjected to flame contact with a 20 mm flame for 10 seconds, and the combustion time was measured. A combustion test was performed on five test pieces and the number of samples that combusted up to the clamp, the maximum value (max) of each combustion time, and the sum of the five combustion times (total combustion time: total) were recorded.

The results are shown in Table 3.

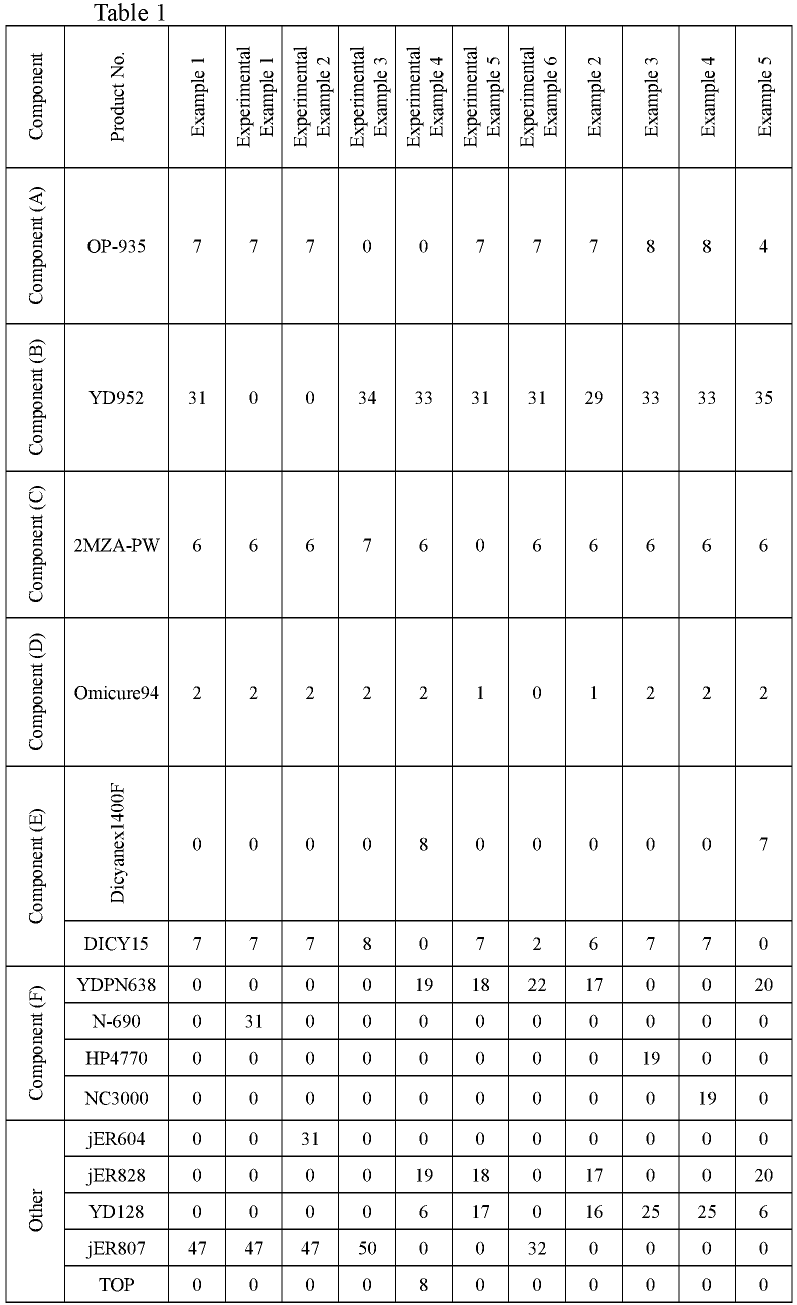

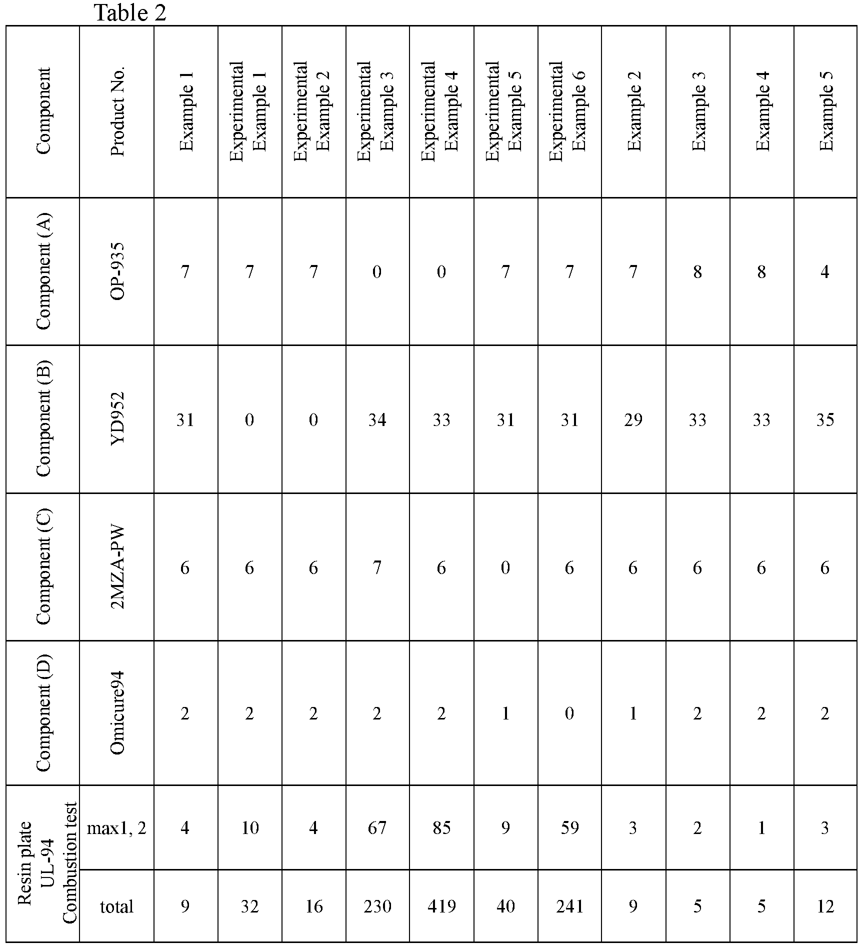

**Table 3**

| Component | Product No. | Example 1 |
|---|---|---|
| Component (A) | OP-935 | 7 |
| Component (B) | YD952 | 31 |
| Component (C) | 2MZA-PW | 6 |
| Component (D) | Omicure94 | 2 |
| Fiber-reinforced composite material UL-94 Combustion test | max1, 2 | 3 |
| | total | 12 |

As is clear from the results in Table 2, the resin plates of Examples 1 to 5 had excellent flame retardancy, with a total combustion test time of 10 seconds or less, or around 10 seconds. It is considered that, in Examples 1 to 5, the epoxy groups were activated by the component (B) and the component (C) included in the epoxy resin composition and the cross-linking density of the epoxy resin composition was adequately increased, such that it was possible to uniformly disperse the component (A) and to obtain high flame retardancy.

From the results in Table 3, it is understood that, in the combustion test of the fiber-reinforced composite material, the values of max1 and 2 were smaller than in the combustion test of the resin plate and high flame retardancy was obtained even with the fiber-reinforced composite material. It is considered that the fiber-reinforced composite material contain fibers that inhibit uniform dispersion of the component (A) and form easily combustible parts, such that the combustion progresses more easily than in the resin plate, resulting in inferior combustion tests. However, in Example 1, even with the fiber-reinforced composite material, it was possible to sufficiently suppress the progress of the combustion. On the other hand, the resin plates of Experimental Example 1 not including the component (B), Experimental Example 2 including a polyfunctional epoxy resin without including the component (B), Experimental Example 3 not including the component (A), Experimental Example 4 including a phosphoric acid ester instead of the component (A), Experimental Example 5 not including the component (C), and Experimental Example 6 not including the component (D) were all inferior in flame retardancy in comparison with the resin plates of the Examples.

### [Industrial Applicability]

According to the present invention, it is possible to provide an epoxy resin composition and a prepreg that have excellent flame retardancy, and a molded article and a fiber-reinforced composite material that have excellent flame retardancy and a favorable external appearance, which are obtained using the epoxy resin composition and the prepreg.

## Claims

1. A prepreg formed by impregnating a carbon fiber base material with an epoxy resin composition,
wherein the epoxy resin composition comprises component (A), component (B), component (C), and component (D);
Component (A): an organic phosphinate metal salt,
Component (B): an epoxy resin having an oxazolidone structure,
Component (C): an imidazole compound or an imidazole compound derivative,
Component (D): a urea compound.

2. The prepreg according to Claim 1,
wherein the epoxy resin composition further comprises component (E);
Component (E): a dicyandiamide or a dicyandiamide derivative.

3. The prepreg according to Claim 1 or 2,
wherein the epoxy resin composition further comprises component (F);
Component (F): at least one type of epoxy resin selected from novolac-type epoxy resins, naphthalene-type epoxy resins, and biphenyl-type epoxy resins.

4. The prepreg according to any one of Claims 1 to 3,
wherein the component (A) is an organic phosphinate metal salt represented by Formula (1), 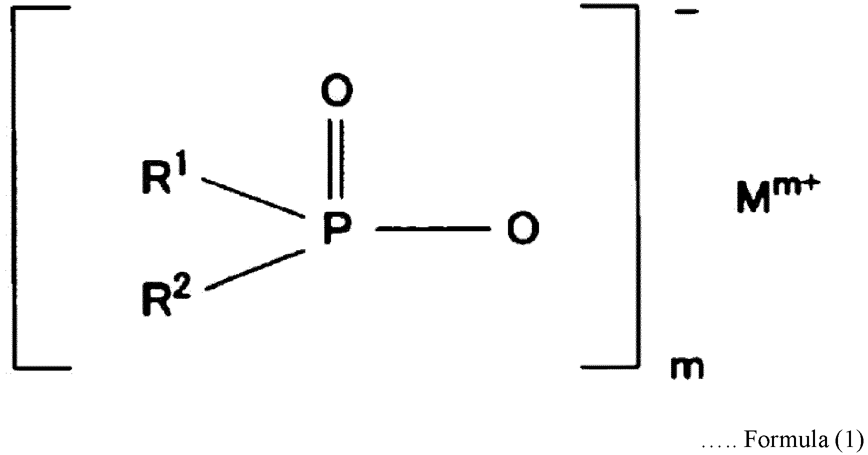
(in Formula (1), R¹ and R² are each independently an alkyl group or an aryl group, M is at least one type selected from the group consisting of Mg, Ca, Al, Sb, Sn, Ge, Ti, Zn, Fe, Zr, Ce, Bi, Sr, Mn, Ni, Li, K, and Na, and m represents an integer of 1 to 4).

5. The prepreg according to Claim 4,
wherein R¹ and R² are alkyl groups, M is Al, and m is 3 in Formula (1).

6. The prepreg according to any one of Claims 1 to 5,
wherein a mass ratio of the component (A) to the component (B) (component (A)/component (B)) comprised in the epoxy resin composition is 0.05 to 0.5.

7. The prepreg according to any one of Claims 1 to 6,
wherein the component (A) is comprised as 1 to 25 parts by mass with respect to 100 parts by mass of the epoxy resin composition.

8. The prepreg according to any one of Claims 1 to 7,
wherein the component (B) is comprised as 20 to 50 parts by mass with respect to 100 parts by mass of the epoxy resin composition.

9. The prepreg according to any one of Claims 1 to 8,
wherein the component (C) is comprised as 1 to 30 parts by mass with respect to 100 parts by mass of the epoxy resin composition.

10. The prepreg according to any one of Claims 1 to 9,
wherein the component (D) is at least one type of compound selected from the group consisting of phenyldimethylurea, methylenebis(phenyldimethylurea), and tolylenebis(dimethylurea).

11. A molded article formed by curing the prepreg according to any one of Claims 1 to 10.

12. An epoxy resin composition comprising component (A), component (B), component (C), and component (D);
Component (A): an organic phosphinate metal salt,
Component (B): an epoxy resin having an oxazolidone structure,
Component (C): an imidazole compound or an imidazole compound derivative,
Component (D): a urea compound.

13. The epoxy resin composition according to Claim 12, further comprising:
component (E);
Component (E): a dicyandiamide or a dicyandiamide derivative.

14. The epoxy resin composition according to Claim 12 or 13, further comprising:
component (F);
Component (F): at least one type of epoxy resin selected from novolac-type epoxy resins, naphthalene-type epoxy resins, and biphenyl-type epoxy resins.

15. The epoxy resin composition according to any one of Claims 12 to 14,
wherein the component (A) is an organic phosphinate metal salt represented by Formula (1), 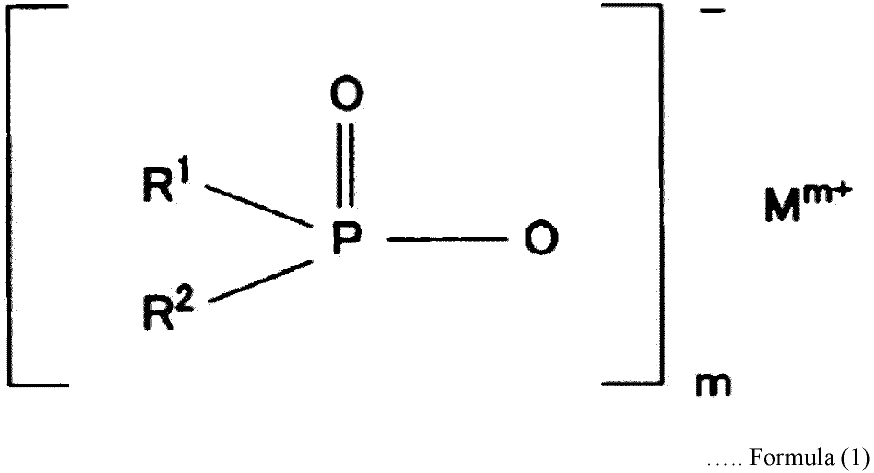
(in Formula (1), R¹ and R² are each independently an alkyl group or an aryl group, M is at least one type selected from the group consisting of Mg, Ca, Al, Sb, Sn, Ge, Ti, Zn, Fe, Zr, Ce, Bi, Sr, Mn, Ni, Li, K, and Na, and m represents an integer of 1 to 4).

16. The epoxy resin composition according to Claim 15,
wherein R¹ and R² are alkyl groups, M is Al, and m is 3 in Formula (1).

17. The epoxy resin composition according to any one of Claims 12 to 16,
wherein a mass ratio of the component (A) to the component (B) (component (A)/component (B)) comprised in the epoxy resin composition is 0.05 to 0.5.

18. The epoxy resin composition according to any one of Claims 12 to 17,
wherein the component (A) is comprised as 1 to 25 parts by mass with respect to 100 parts by mass of the epoxy resin composition.

19. The epoxy resin composition according to any one of Claims 12 to 18,
wherein the component (B) is comprised as 20 to 50 parts by mass with respect to 100 parts by mass of the epoxy resin composition.

20. The epoxy resin composition according to any one of Claims 12 to 19,
wherein the component (C) is comprised as 1 to 30 parts by mass with respect to 100 parts by mass of the epoxy resin composition.

21. The epoxy resin composition according to any one of Claims 12 to 20,
wherein the component (D) is at least one type of compound selected from the group consisting of phenyldimethylurea, methylenebis(phenyldimethylurea), and tolylenebi s(dimethylurea).
